# EUROPEAN PATENT APPLICATION

(11) **EP 4 548 995 A1**
(43) Date of publication of application: **07.05.2025**
(21) Application number: 24208780.7
(22) Date of filing: 24.10.2024
(51) Int. Cl.: B01D 41/04, B01D 46/00

(54) **CLEANING DEVICE FOR CLEANING A FILTER OF THE TYPE USED TO FILTER THE AIR SUCKED INTO AN INTERNAL COMBUSTION ENGINE OF A VEHICLE**

(30) Priority: 31.10.2023 IT 202300022953
(71) Applicant: Marcantoni, Ivano, 37059 Volon di Zevio (VR) (IT)
(72) Inventor: Marcantoni, Ivano, 37059 Volon di Zevio (VR) (IT)
(74) Representative: Contadin, Giorgio

(57) **Abstract**

A cleaning device (1; 101) for cleaning a filter (F) of the type used to filter the air sucked into an internal combustion engine of a vehicle. The device (1; 101) comprises a containment casing (10; 110) suitable to internally define a treatment and positioning zone (12; 112) of the filter (F) to be cleaned and generation means (20; 120) of an air flow (A; A') which passes through said treatment zone (12; 112). The casing (10; 110) is provided with an outlet (14; 114) and is configured to convey the air flow (A; A') coming from the generation means (20; 120) towards the outlet (14; 114).

## Description

The present invention belongs to the field of systems for cleaning filters used to filter the air sucked into an internal combustion engine of vehicles.

The use is known, in vehicles moved by an internal combustion engine, of an air suction system which provides the air required to burn the fuel in a combustion chamber to generate the energy required.

The air suction system is advantageously equipped with a filtration system in which the air coming from the outside and conveyed towards the combustion chamber is passed through a specific filtration unit in which the impurities, such as dust and/or debris, are specifically trapped.

A filtration unit of the known type, hereinafter simply indicated by the term filter, may be made with various shapes and configurations.

The filter essentially comprises a filtering surface, for example, a mesh surface or a porous surface such as a layer made of paper, on which the impurities accumulate during the use of the filter. The air filter requires replacement or regular cleaning to maintain the cleaning function thereof at desired levels.

Filters of the known type, for example, air filters used in heavy-duty vehicles, such as agricultural machinery, scrapers, trucks or buses, substantially comprise a cylindrical surface removably inserted in a specific housing to allow the easy replacement thereof when required, i.e., for replacement or cleaning.

The usual cleaning techniques provide the use of a compressor in which the compressed air exiting the blowing nozzle is manually directed by the operator against the filtering surface.

Such an operation may be particularly cumbersome in particular applications where cleaning is to be done often, for example, a daily cleaning of the filters mounted on board of agricultural machinery or scrapers exposed to particularly heavy working conditions in terms of contaminants, such as dust and/or plant fragments.

A drawback of said manual cleaning methodology with a compressor consists of the dispersion of the impurities into the surrounding environment.

Another drawback of such a methodology consists of the fact that the quality of the result is related to the ability of the operator performing the operation. The manual cleaning operation often results in non-uniform cleaning of the filtering surface subjected to the cleaning treatment.

A further drawback of such a methodology consists of the hard work to accurately clean the filter.

Another drawback of such a methodology is associated with the possibility of damaging the filtering surface subjected to the treatment due to the increased pressure exiting the blowing nozzles, in particular when the filtering surface does not have a significant consistency, for example, if it is made of paper.

Therefore, the present invention seeks to overcome the aforesaid drawbacks of the prior art.

In particular, it is main purpose of the present invention to provide a cleaning device for cleaning a filter of the type used to filter the air sucked into an internal combustion engine of a vehicle, which allows minimizing, or eliminating, the dispersion of impurities into the environment during the cleaning process.

It is another purpose of the present invention to design a cleaning device for cleaning a filter of the type indicated above which allows improved cleaning quality to be ensured with respect to the processes of the known type, in particular, uniform and accurate cleaning of the actual filtering surface of the filter to be cleaned.

It is a further purpose of the present invention to provide a cleaning device for cleaning a filter of the type indicated above which allows the operations performed by the operator to be simplified.

It is another purpose of the present invention to create a cleaning device for cleaning a filter of the type indicated above which allows any damage of parts of the filter to be minimized with respect to the processes of the known type.

Said purposes are achieved by means of a cleaning device for cleaning a filter of the type used to filter the air sucked into an internal combustion engine of a vehicle as per appended claim 1, to which reference is made for the sake of brevity of disclosure.

In particular, according to a first aspect of the present invention, the cleaning device for cleaning a filter of the type used to filter the air sucked into an internal combustion engine of a vehicle comprises:
- a containment casing suitable to internally define a treatment and positioning area of said filter to be cleaned;
- generation means of an air flow which passes through said treatment zone; said casing being provided with an outlet and being configured to convey said air flow coming from said generation means towards said outlet.

Further detailed operating features of the cleaning device of the present invention are indicated in the related dependent claims.

The aforesaid claims, specifically and concretely defined below, are intended as an integral part of the present description.

The purposes and advantages indicated will be more apparent from the following description, related to certain preferred embodiments of the cleaning device of the invention, given by way of indicative and illustrative but non-limiting example, with reference to the accompanying drawings; in the drawings, features and/or component parts corresponding or equivalent to the present invention may at times be identified by the same reference numerals. In particular, in the drawings:
- figure 1 shows an assonometric view of a cleaning device according to a preferred embodiment of the invention;
- figure 2 shows the exploded view of the cleaning device in figure 1;
- figure 3 shows the cleaning device in figure 1, with some elements removed;
- figure 4 is a section along a vertical plane of the device in figure 1, with the filter to be cleaned inserted;
- figure 5 shows the section of figure 4 in which the filter to be cleaned has been removed;
- figure 6 is an assonometric view of the device in figure 1 sectioned along a horizontal cross-section plane;
- figure 7 is a sectional plan view along a horizontal cross-section plane of the device in figure 1, with the filter to be cleaned inserted;
- figure 8 shows a diagrammatic view of a cleaning device according to a preferred embodiment of the invention.

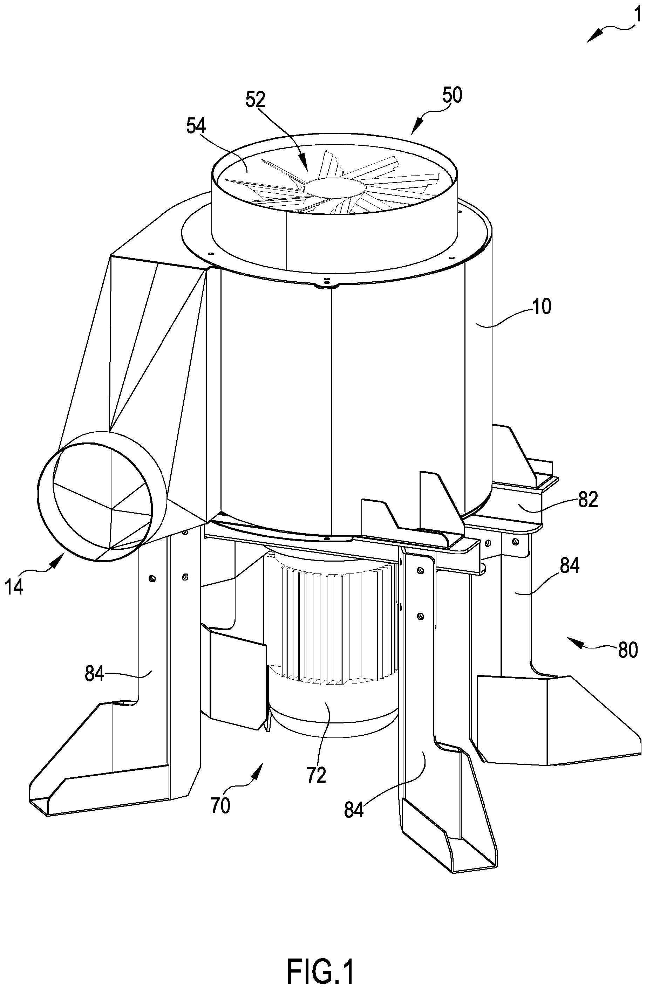

An assonometric view of a cleaning device 1 for cleaning a filter F according to a preferred embodiment of the invention is shown in figure 1.

Filter F to be cleaned according to the present invention relates to a filter F used for filtering the air sucked into an internal combustion engine of vehicles.

According to the preferred embodiment shown in the drawings, filter F comprises a cylindrical element in which the filtering surface to be cleaned is defined. For example, the filter comprises a structure to which a filtering layer adheres, for example, a layer of paper.

However, in preferred embodiments, filter F may be made differently and according to the techniques known in the field of systems for the filtration of the air sucked into an internal combustion engine of vehicles.

The cleaning device 1 according to the invention, hereinafter indicated also simply as cleaner 1, firstly comprises a containment casing 10 suitable to internally define a treatment and positioning zone 12 of filter F to be cleaned.

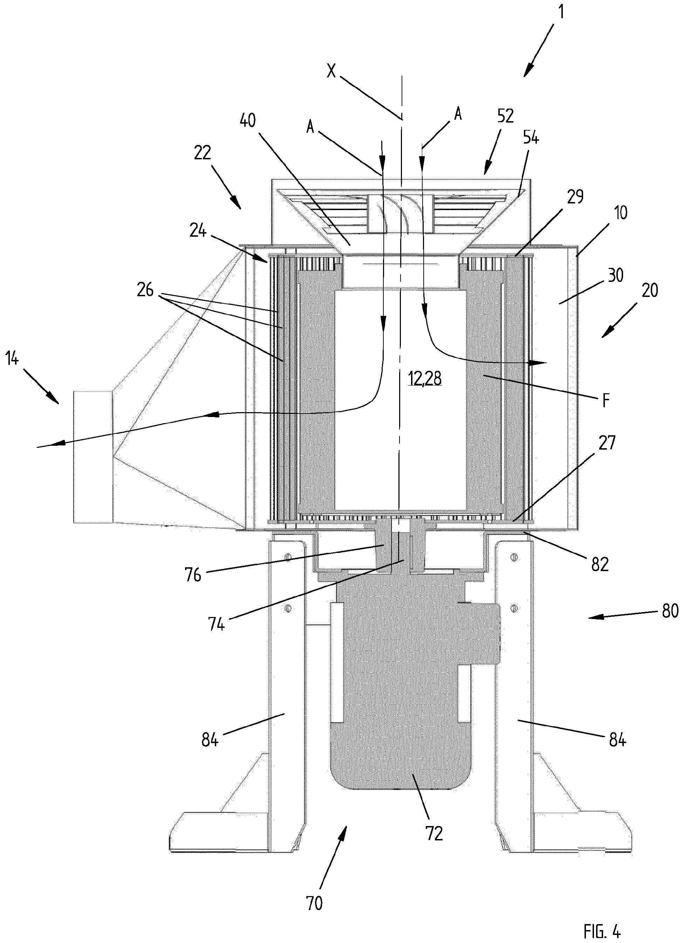

The treatment zone 12 is preferably associated with a support base 27 for filter F, which is better described below and shown in figure 4.

The containment casing 10 is preferably supported by a support structure 80 comprising a frame 82 with support legs 84 suitable to rest on a reference surface, such as the yard of an industrial warehouse (not shown).

According to an aspect of the invention, cleaner 1 comprises generation means 20 of an air flow A which passes through the treatment zone 12.

Advantageously, when filter F is inserted into the containment casing 10 and at the treatment zone 12, the air flow A passes also through the filter F itself.

According to the invention, the containment casing 10 is provided with an outlet 14 and is configured to convey said air flow A coming from the generation means 20 towards outlet 14.

In operation, the air flow A passing through filter F cleans the filtering surface of filter F where the impurities have accumulated. The air flow A downstream of filter F and containing the impurities is then conveyed towards outlet 14.

In a preferred embodiment, a dust collector, not shown, adapted to separate the impurities from the air flow A coming from the outlet 14 of the casing 10 is associated with said outlet 14. In a preferred embodiment, the dust collector is a centrifugal or cyclone dust collector.

Cleaner 1 according to the invention therefore effectively cleans filter F and allows the collection of the impurities, avoiding the dispersion thereof into the environment.

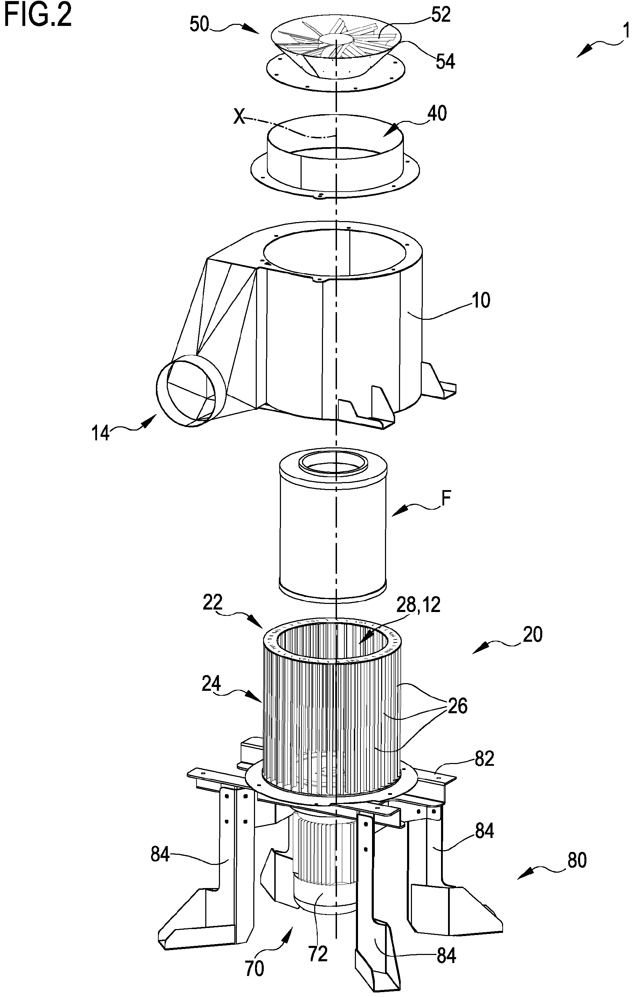

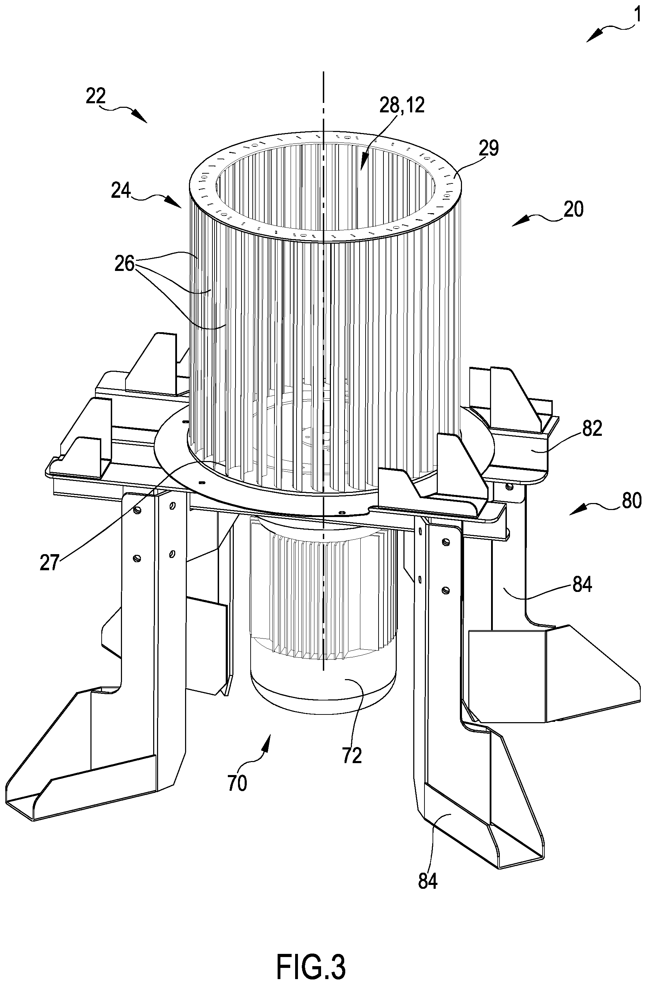

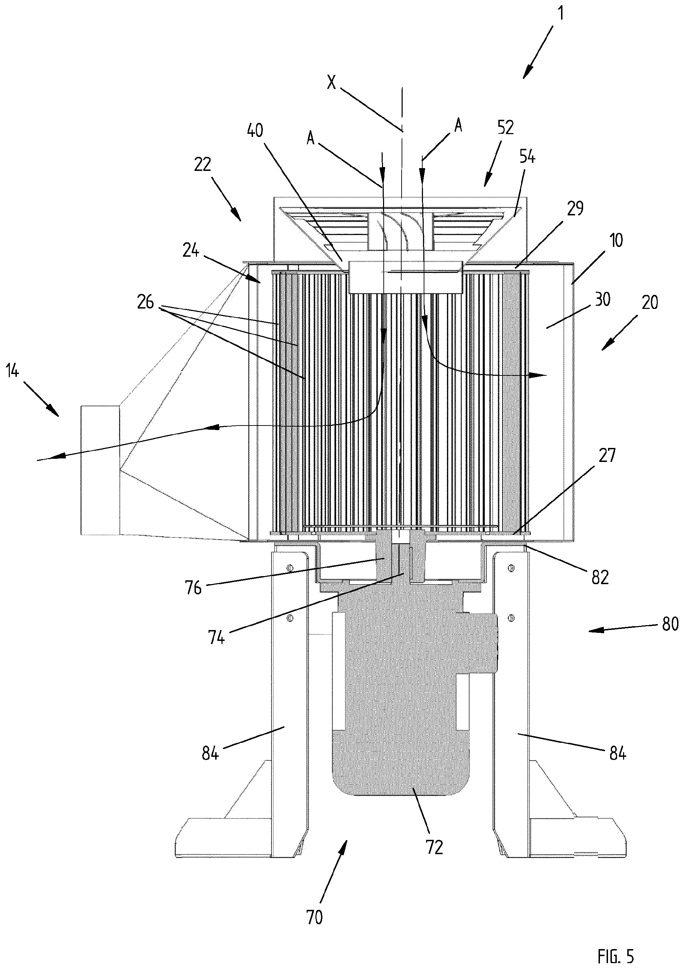

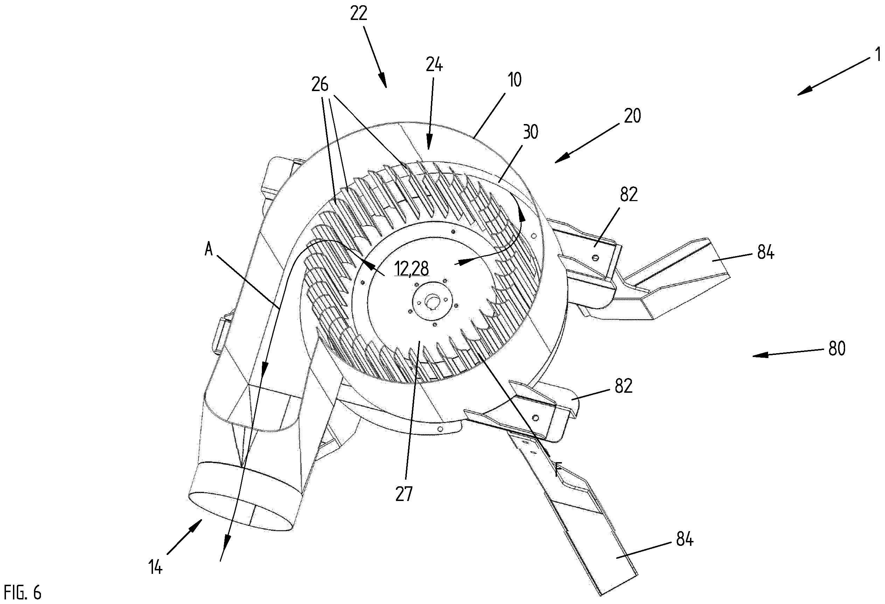

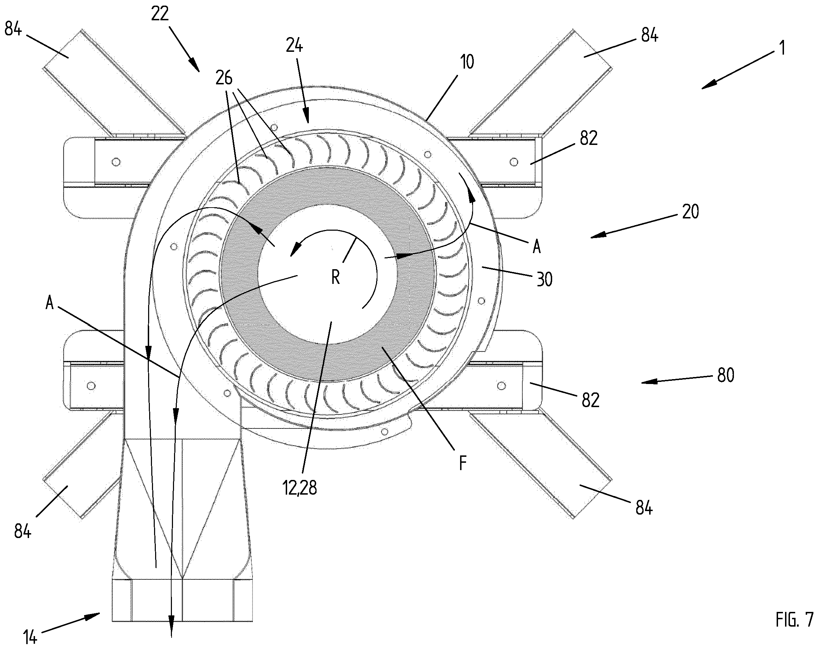

According to the embodiment shown in figures 1 to 7, the generation means 20 of the air flow A comprise preferably a centrifugal aspirator 22.

The centrifugal aspirator 22 includes an impeller 24 consisting of a plurality of blades 26 arranged around a central rotation axis X. The blades 26 advantageously define a radially inner zone 28 for air intake and a radially outer zone 30 for air expulsion.

Said treatment zone 12 of filter F is located in the radially inner zone 28 defined by the blades 26.

The blades 26 are preferably fastened below to a circular base 27 and above to a ring 29.

The circular base 27 limits the treatment zone 12 of filter F below and constitutes said support base 27 on which filter F to be cleaned is positioned.

The centrifugal aspirator 22 generates the desired air flow A which enters the radially inner zone 28 of the impeller 24 from an axial direction, and then is pushed towards the radially outer zone 30 by the action of the blades 36.

With filter F inserted in casing 10, the air flow A also radially passes through filter F itself from the inside to the outside.

The rotation direction R of the impeller 24 and the shape of the blades 36 allows the desired radial air flow A to be obtained. For example, a centrifugal aspirator may be used with blades having forwards curvature in which the air exits tangentially from the outer circumference of the impeller, i.e., a centrifugal aspirator 22 as the one shown in the drawings. Alternatively, a centrifugal aspirator may be used with blades having backwards curvature in which the air exits in radial direction from the outer circumference of the impeller.

According to the preferred embodiment shown in the drawings, the air flow A axially enters the radially inner zone 28 of the impeller 24, coming from an inlet 40 made in the casing 10.

Inlet 40 is preferably made in the upper part of the casing 10.

Conveyor means 50 allowing the flow rate of the air flow A to be increased are preferably associated with inlet 40.

Preferably, such conveyor means 50 comprise an axial fan in which a propeller 52 is positioned idle on a preferably frustoconical seat 54.

Propeller 52 is put automatically into rotation by the air flow A generated following the actuation of the centrifugal aspirator 22. The conveyor means 50 allow the flow rate of the air flow A to be increased, and therefore the ability thereof to extract impurities from filter F.

In order to allow the rotation of impeller 24 of the centrifugal aspirator 22, cleaner 1 is equipped with suitable rotation means 70.

According to the preferred embodiment shown in the drawings, the rotation means 70 comprise an electric motor 72 fastened to frame 82 of the support structure 80. The outlet shaft 74 of the electric motor 72 is keyed onto the circular base 27 of impeller 24, preferably by means of an interconnecting sleeve 76.

According to such an embodiment therefore, in operation with the rotation of the impeller 24, also filter F is subjected to rotation, given that filter F rests on the rotating circular base 27.

Finally, the upper part of casing 10 is configured to be easily opened and closed to facilitate the operations of inserting filter F into the treatment zone 12 and removing the same after cleaning. In a preferred embodiment of the invention, the upper part of the containment casing 10 may be 5 opened/closed by using specific fastening screws (not shown for disclosure simplicity).

In general, the containment casing 10 is preferably provided with a closeable door for allowing the operations of inserting filter F in the treatment zone 12 and extracting the same after cleaning.

The containment casing 10 according to the embodiment shown and described above preferably has a substantially cylindrical shape with a substantially funnel portion at outlet 14. The shape of the containment casing 10 is mainly configured based on the shape of filter F to be treated, i.e., cylindrical, and on the corresponding shape of impeller 24, it also substantially cylindrical-shaped as a whole.

However, in embodiment variants, the shape of the containment casing, as also of the air flow generation means, may be different from that illustrated, and may be suitably shaped to adapt to the actual shape of the filter to be cleaned in the best manner.

It is apparent from the above how cleaner 1 of the invention improves the cleaning quality of the filters with respect to the processes actuated by the equivalent devices of the known type, in particular it ensures the uniform and accurate cleaning of the filtering surface of filter F to be cleaned.

Moreover, advantageously, cleaner 1 of the invention cleans the filter automatically and minimizes the operations performed by the operator to essentially the sole operations of insertion of filter F to be cleaned into casing 10 and final removal of the clean filter F. The cleaning process of filter F is in fact favorably automated, without the need of an operator.

Again advantageously, cleaner 1 of the invention avoids damage to the filter, as occurs in the systems of the known type where a flow of a nozzle supplied by a compressor is employed.

In an embodiment variant (not shown) of the above-described cleaner of the invention, the generation means of the air flow may comprise means adapted to convey an air flow into the radially inner zone of the filter from an axial direction so that, in operation, the air flow passes through the filter from the inside to the outside and cleans the filtering surface of the filter.

Such generation means of the air flow could preferably comprise an axial fan arranged at the inlet (for example, an axial fan in place of propeller 52 shown in the drawings).

According to such an embodiment, the centrifugal aspirator described above obviously may be omitted.

Then, in a further embodiment, both means for generating the air flow may be provided, i.e., the centrifugal aspirator and the generation means of the air flow with axial direction.

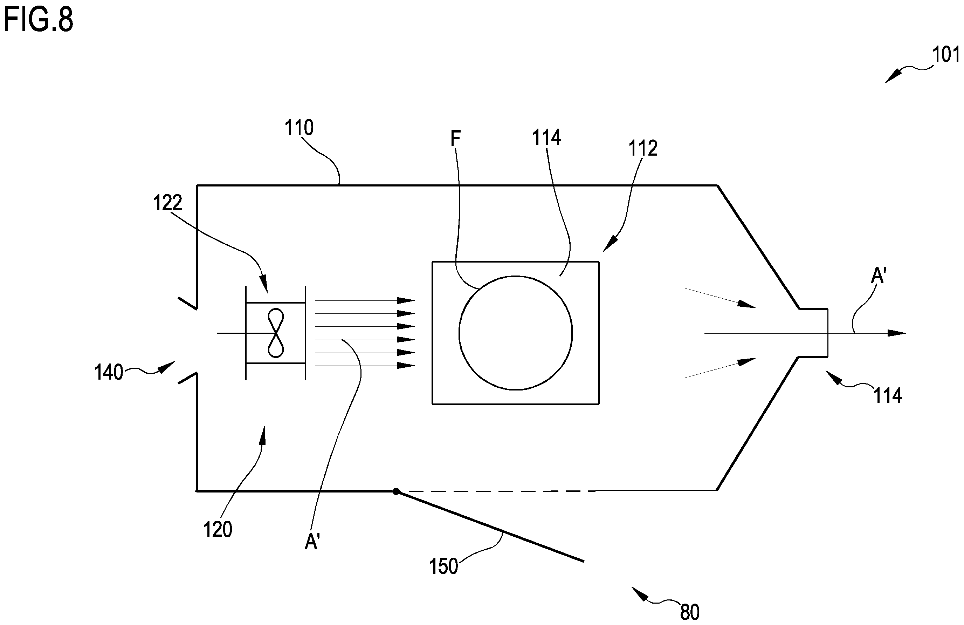

With reference to the diagrammatic figure 8, a cleaning device 101 according to an embodiment variant of the invention is described below.

The cleaning device, now globally numbered 101, according to such an embodiment, differs mainly from the embodiment described above for the way in which the air flow hits filter F to be cleaned.

The cleaning device (or cleaner) 101 according to such an embodiment comprises a containment casing 110 suitable to internally identify a treatment and positioning zone 112 of filter F to be cleaned.

A support base 114 for filter F is preferably associated with the treatment zone 112.

Cleaner 101 comprises generation means 120 of an air flow A' which passes through the treatment zone 112. Advantageously, when filter F is inserted into casing 110 and at the treatment zone 112, the air flow A' passes also through filter F itself.

Casing 110 is provided with an outlet 114 and is configured to convey said air flow A' coming from the generation means 120 towards outlet 114.

In operation, the air flow A' passing through filter F cleans the filtering surface of filter F where the impurities have accumulated. The air flow A' downstream of filter F and containing the impurities is then conveyed towards outlet 114.

In a preferred embodiment, a dust collector (not shown) adapted to separate the impurities from the air flow A' coming from the outlet 114 of casing 110 is associated with said outlet 114. In a preferred embodiment, the dust collector is a centrifugal or cyclone dust collector.

According to such a preferred embodiment, the generation means 120 of the air flow A' comprise an axial fan 122 which generates and conveys an air flow A' towards the treatment zone 112 of filter F.

With filter F inserted in the containment casing 110, the air flow A' passes through filter F.

According to the preferred embodiment shown in the drawing, the air flow A' is sucked by the axial fan 122 coming from an inlet 140 made in casing 110. Conveyor means allowing the flow rate of the air flow A' to be increased may be preferably associated with inlet 140, for example, an axial fan of the type described above with reference to the first embodiment.

Casing 110 is finally preferably provided with a closeable door 150 for allowing the operations of inserting filter F into the treatment zone 112 and extracting the same after cleaning.

From the foregoing description, it is apparent how cleaner 101 according to such an embodiment of the invention allows the same advantages indicated above with reference to the first embodiment of the invention to be obtained.

In light of the above description, it therefore is understood that the cleaning device of the present invention, expressly employed for cleaning a filter of the type used to filter the air sucked into an internal combustion engine of a vehicle, achieves the objects and creates the aforesaid advantages.

Finally, it is apparent that many other variants may be made to the cleaning device examined herein, falling within the scope of the appended claims, just as it is apparent that in the practical implementation of the invention, the materials, shapes, and sizes of the details shown may be any, according to the requirements, and may be replaced by other technically equivalent elements.

Where the constructive features and techniques mentioned in the claims below are followed by references signs or numerals, such reference signs were introduced for the sole purpose of increasing the intelligibility of the claims themselves, and therefore, such reference signs have no limiting effect on the interpretation of each element identified, by way of example only, by such reference signs.

## Claims

1. Cleaning device (1; 101) for cleaning a filter (F) of the type used to filter the air sucked into an internal combustion engine of a vehicle, **characterized in that** it comprises:
- a containment casing (10; 110) suitable to internally define a treatment area and positioning (12; 112) of said filter (F) to be cleaned;
- generation means (20; 120) of an air flow (A; A') which passes through said treatment zone (12; 112),
said containment casing (10; 110) being provided with an outlet (14; 114) and being configured to convey said air flow (A; A') coming from said generation means (20; 120) towards said outlet (14; 114).

2. Device (1; 101) according to claim 1), **characterized in that** said containment casing (10; 110) includes an inlet (40; 140) for the suction of air from the outside of said containment casing (10; 110).

3. Device (1) according to claim 1) or 2), **characterized in that** said generation means (20) of an air flow (A) comprise a centrifugal aspirator (22).

4. Device (1) according to claim 3), **characterized in that** said centrifugal aspirator (22) includes an impeller (24) constituted by a plurality of blades (26) arranged around a central rotation axis (X) and suitable to define a radially inner zone (28) for air intake and a radially outer zone (30) for air expulsion.

5. Device (1) according to claim 4), **characterized in that** said treatment zone (12) is defined at said radially inner zone (28) of said impeller (24).

6. Device (1) according to claim 4) or 5), **characterized in that** it includes rotation means (70) of said impeller (24).

7. Device (1; 101) according to any of claims 2) to 6), **characterized in that** it includes conveyor means (50) associated with said inlet (40; 140) to increase the flow rate of said flow 'air (A; A').

8. Device (1; 101) according to claim 7), **characterized in that** said conveyor means (50) include a fan (52).

9. Device (1; 101) according to any of the previous claims, **characterized in that** it also comprises a dust collector suitable to separate the impurities from said air flow (A; A') coming from said outlet (14; 114) of said containment casing (10; 110).

10. Device (1; 101) according to claim 9), **characterized in that** said dust collector is a centrifugal dust collector.

11. Device (1; 101) according to any of the previous claims, **characterized in that** said containment casing (10; 110) includes a closable door (150) to allow the insertion/extraction operations of said filter (F) into/from said treatment zone (12; 112).
